# EUROPEAN PATENT APPLICATION

(11) **EP 1 536 385 A2**
(43) Date of publication of application: **01.06.2005**
(21) Application number: 04256889.9
(22) Date of filing: 05.11.2004
(51) Int. Cl.: G07F 7/00, G07F 17/16

(54) **Method and apparatus for distribution of digitised information**

(30) Priority: 25.11.2003 GB 0327382
(71) Applicant: Tribeka Limited, London W1U 6UE (GB)
(72) Inventor: Doll-Steinberg, Daniel, London, NW8 0QN (GB)
(74) Representative: Maggs, Michael Norman

(57) **Abstract**

A method and apparatus for distributing digitised information comprises presentation of digitised information such as software titles at a user advice point such as a computer terminal. The user selects a desired product and the terminal provides a high resolution display image of the packaging which can be zoomed or panned allowing the user to make an informed decision about purchase of the product. In addition the user can order the product such that download and burning of the product and printing of the packaging take place instantly whilst the user is carrying out a subsequent payment step.

## Description

The invention relates to a method and apparatus for distribution of digitised information in particular such a method implemented at a customer advice point.

Methods of distribution of digitised information such as software through retail outlets are known according to which provisions are made for displaying the range of software titles available. In a conventional retail store, where a limited range of software titles is offered for sale, physical samples in the form of empty boxes can be put on shelf displays for the perusal of potential customers. Potential customers can view information on the front, back and spine of the empty box, and can order titles on display by taking the empty box to a sales point or by asking for the help of an assistant.

An improved system is described in International patent application WO00/36536, commonly assigned herewith and incorporated herein by reference. According to the system described in that document, a user selects a desired software title on a computer terminal at a retail outlet. The software is then downloaded or otherwise accessed and manufactured at the retail outlet for sale on a physical medium, for example by "burning" a CD-ROM or DVD as well as printing the associated packaging.

Such an electronic distribution method allows for a far wider range of titles to be offered than could be put on display, and it is possible, on a one off basis, to print sample packaging for the specific use of a customer interested in a particular title, that might not currently be displayed as a physical sample. However this method would not necessarily guarantee a sale and could result in a waste of raw materials that might subsequently have to be discarded.

The invention is set out in the claims.

Embodiments of the invention will now be described, by way of example, with reference to the drawings of which:

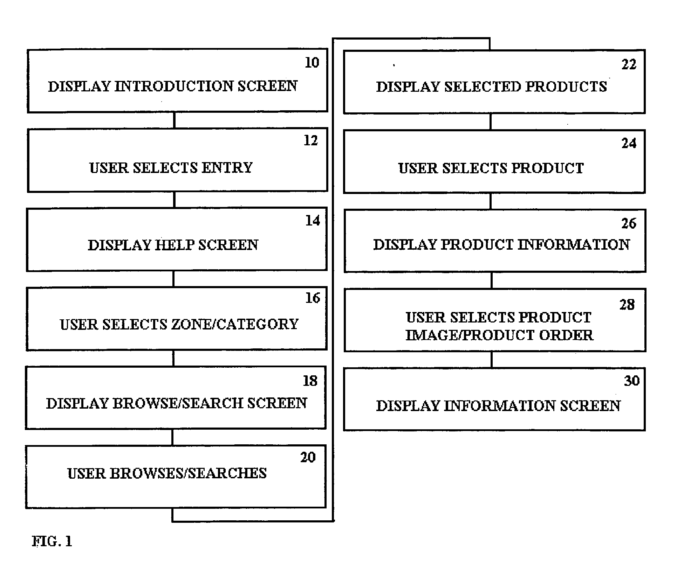

Fig. 1 is a flow diagram showing operational steps according to the method described herein.

In overview, the method described herein allows a user or customer at a user or customer advice point to search or browse a plurality of software titles, select one title and view a detailed image of the associated packaging. As a result the whole of a very wide range of software titles is made available for customer perusal by electronic means, with high resolution images that can be zoomed into to give a detailed view of the packaging, allowing confirmation of an order, and promulgation of the manufacture and sale of software titles on demand.

The method by which the digitised information can be displayed, downloaded and manufactured will be known to the skilled reader, for example from WO00/36536 and so is not described in detail herein. In summary, a customer advice point such as a computer terminal can be connected to a data store, for example via the Internet and made available to potential customers. In the case for example of digital information comprising software titles, the packaging of each software title is rendered into a graphic file format that can be displayed on demand through a computerised catalogue viewed at the customer advice point. The customer advice point is typically implemented in interactive computer hardware and software, with touch screen facilities obviating the need for a mouse and keyboard whilst in normal operation.

The range of available titles can be searched or browsed according to title, publisher, category, hardware platform, operating system and by a variety of other parameters. The method also allows browsing by colour coded zones representing locations in the actual retail store where physical product is on display. Within each zone the range of titles can be further filtered with reference to application type and category. Any other appropriate classification system can of course be used.

The implementation of the additional steps described herein will be further understood with reference to the flow diagram of Fig. 1 which shows typical screens and user selections.

At step 10 an introduction page is displayed on the terminal screen, for example an animation attracting potential users. At step 12 a user selects an entry option to the system. For example this can be achieved by touching any part of the screen in a touch screen system. At step 14 the terminal displays a help screen displaying the basic steps to operate the system. At step 16 the user selects either a zone (for example a location in the actual store) or category (for example type of product). At step 18, within the selected zone or category, the user can select either a browse or search function and at step 20 the user browses or searches for a desired product. At step 22 the selected products are displayed at the terminal for example providing a list of product information for each. Optionally the user can request a "refine" function where a sub-category and/or a brand can be selected before returning to the product screen at step 22. At step 24 the user confirms selection of the product and at step 26 details of the chosen title are shown. At step 28 the user can either select a product image or a product order. Following a selection of product image, for example by activating an "enlarged picture" button, front and back of the title cover can be shown together with a zoom option allowing the user to zoom to any part of the title cover. Zoom and pan facility are included in the graphic file viewer so that the customer can see the whole of the graphic packaging, including the front, the back and the spine in such a way that all the information carried by the actual packaging can be viewed and read in fine detail, before a purchasing decision is made. Customers are thus able to establish that they have a suitable computer platform, system configuration and operating system before purchasing a software title.

A customer can add a personal message to be incorporated in the label printed onto the body of the physical medium produced by the manufacturing process. Personalisation can be provided as an option alternative to the print screen. Once the system is personalised the user can proceed to the print screen. In that case customers can preview a representation of the personalised medium at the customer advice point.

Alternatively the print screen can be accessed directly by selecting the product order function at step 28. According to this aspect the system provides a means to promulgate an order for a software title and have the order confirmed either by printing an order ticket for presentation at a sales counter or by asking an assistant to confirm the order at the customer advice point so that the manufacturing process can begin. The assistant might confirm the order by use of password identification or by application of an electronic key. Payment for the product can be taken whilst the product were manufactured, thus speeding up the ordering and manufacturing process.

At step 30 the system displays a closing or "thank you" screen informing the user how to proceed further with the printed order ticket.

As a result of the system described above, the method provides a range of advantages including the ability, preferably with the intervention of an authorised assistant, to submit an order and start the manufacturing process before taking payment.

It will be appreciated that the system can be implemented in any appropriate form using any appropriate software or hardware. Orders can be confirmed and production commenced from any number of available customer advice points within a single retail outlet or across a number of retail outlets.

Although the discussion is directed to software titles it will be appreciated that any form of media which can be produced on demand is appropriate.

## Claims

1. A method of distributing digital information at a user advice point comprising displaying information relating to at least one packageable digitised information product at the user advice point, receiving a selection instruction from a user selecting a digitised information product and providing a high resolution display image of the digitised information product packaging.

2. A method as claimed in claim 1 in which the display image is user manipulable to render any aspects of the packaging user readable.

3. A method as claimed in claim 1 or claim 2 in which a plurality of user advice points are provided.

4. A method as claimed in any preceding claim in which a user inputs a personalised message to appear on the digitised information product or packaging.

5. A method as claimed in claim 4 further comprising providing a display image of the digitised information product or packaging showing the personalised message.

6. A method of distributing digitised information at a user advice point comprising displaying information relating to at least one digitised information product at the user advice point and receiving in separate steps an order instruction and a payment instruction from a user in which production of a digitised information product is commenced upon receipt of an order instruction prior to receipt of a payment instruction.

7. A method as claimed in claim 6 further comprising creating an order record representing the order instruction.

8. A method as claimed in claim 7 in which the order record is an order ticket.

9. A method as claimed in any of claims 6 to 8 further comprising authenticating an order instruction.

10. A method as claimed in claim 9 in which an order instruction is authenticated by at least one of a user identification, a password and an electronic key.

11. An apparatus for the distribution of digitised information comprising a user advice point including a display for displaying information relating to at least one packageable digitised information product, a user input for receiving a digitised information product selection instruction from a user and a processor arranged to provide to the display a high resolution display image of the selected digitised information product packaging.

12. An apparatus for the distribution of digitised information comprising a user advice point including a display for displaying information relating to at least one digitised information product, a user input for receiving separately a digitised information product order instruction and a digitised information product payment instruction from a user and a processor arranged to produce the ordered digitised information product packaging upon receipt of the order instruction prior to receipt of the payment instruction.

13. A computer readable medium comprising a set of instructions configured to implement the method as claimed in any of claims 1 to 10.

14. A computer program comprising a set of instructions configured to implement a method as claimed in any of claims 1 to 10.

15. A computer arranged to operate under the instructions of a computer program as claimed in claim 14.
